# EUROPÄISCHE PATENTSCHRIFT

(11) **EP 3 326 267 B1**
(45) Veröffentlichungstag und Bekanntmachung des Hinweises auf die Patenterteilung: **13.05.2020**
(21) Anmeldenummer: 16728683.0
(22) Anmeldetag: 13.06.2016
(51) Int. Cl.: H01R 13/405, H02K 5/22, H01R 13/52

(54) **LEISTUNGSANSCHLUSS FÜR EIN ELEKTRISCHES GERÄT, INSBESONDERE FÜR EINE ELEKTRISCHE MASCHINE ZUM ANTREIBEN EINES KRAFTFAHRZEUGES**
POWER CONNECTION FOR AN ELECTRICAL APPLIANCE, ESPECIALLY FOR AN ELECTRICAL MACHINE FOR DRIVING A MOTOR VEHICLE
CONNECTION DE PUISSANCE POUR UN APPAREIL ÉLECTRIQUE, NOTAMMENT POUR UNE MACHINE ÉLECTRIQUE POUR ENTRAÎNER UN VÉHICULE AUTOMOBILE

(30) Priorität: 17.07.2015 DE 102015213439
(43) Veröffentlichungstag der Anmeldung: 30.05.2018
(73) Patentinhaber: ZF Friedrichshafen AG, 88046 Friedrichshafen (DE)
(72) Erfinder: WEIDNER, Matthias, 97535 Wasserlosen (DE); WITTMANN, Jochen, 97705 Burkardroth (DE); GEIGER, Martin, 97261 Güntersleben (DE)
(74) Vertreter: ZF Friedrichshafen AG
(86) Internationale Anmeldenummer: PCT/EP2016/063423
(87) Internationale Veröffentlichungsnummer: WO 2017/012778

(56) Entgegenhaltungen:
- EP-A1- 2 667 462
- WO-A1-2015/002241
- DE-T2- 60 206 541
- US-A1- 2011 316 373

## Beschreibung

Die vorliegende Erfindung bezieht sich auf einen Leistungsanschluss für eine elektrische Maschine zum Antreiben eines Kraftfahrzeuges gemäß dem Oberbegriff von Patentanspruch 1.

Ein gattungsgemäßer Leistungsanschluss ist beispielsweise bereits mit der DE 10 2004 030 810 B4 bekannt geworden, wobei mehrere Verbindungsleiter zur Ausbildung eines Gehäuseelements mit einem Kunststoff umspritzt sind. Zur Erzeugung einer Abdichtung wird vor dem Umspritzen der Verbindungsleiter jeweils ein ringförmiges Dichtelement aus Polyphenylsulfit (PPS) in einer Ausrichtvertiefung eines Verbindungsleiters beispielsweise mittels eines Spritzgussvorgangs angeheftet oder dort befestigt. Das Dichtelement ist somit vollständig zwischen dem Verbindungsleiter und dem Gehäuseelement eingebettet und kann durch dessen Elastizität einen Spalt zwischen den Verbindungsleitern und dem Gehäuseelement überbrücken.

Die US 2011/0316373 A1 offenbart einen weiteren Leistungsanschluss der eingangs genannten Art, insbesondere ein Inverteranschlussboard zur Verbindung mit einer elektrischen Maschine eines Fahrzeugantriebs. Das Inverteranschlussboard umfasst ein Gehäuse mit darin eingelegten Verbindungsleitern, wobei an einem motorseitigen Abschnitt der Verbindungsleiter jeweils ein mit dem Gehäuse in Eingriff befindliches Dichtelement angeordnet ist. Das Dichtelement ist vorgefertigt und befindet sich in dessen Einbaulage vollständig innerhalb des Gehäuses.

Des Weiteren geht aus der DE 602 06 541 T2 ein Leistungsanschluss für einen Elektromotor eines Elektrofahrzeugs hervor, bei welchem mit einem Stator verbundene Anschlussleiter in ein Metallgehäuse eingeführt sind und mittels eines dort befindlichen Anschlussblocks mit externen Leitern verbunden werden können. Im Bereich einer Einführöffnung in das Metallgehäuse ist auf die Anschlussleiter eine Gummidichtung aufgeschoben, welche teilweise aus dem Gehäuse heraussteht.

Die EP 2 667 462 A1 beschreibt eine elektrische Kontaktleiterdurchführung durch eine Gehäusewand, wobei zunächst in einem mittleren Abschnitt von mehreren Kontaktleitern durch Kunststoffspritzgießen eine als gemeinsamer Verbindungssteg ausgebildete Innenschicht aufgebracht wird und wobei nachfolgend weiter an dieser Anordnung ebenfalls durch Kunststoffspritzgießen die Gehäusewand erzeugt wird. Es ist dabei vorgesehen, einen die Kontaktleiter umschließenden Bereich der Gehäusewand mehrschichtig auszubilden, wobei die Innenschicht zwischen einer inneren und einer äußeren Schicht eingeschlossen ist, so dass ein Kontaktleiter auf einem Teil seiner Länge vom Kunststoffmaterial der Innenschicht umschlossen ist.

Der vorliegenden Erfindung liegt die Aufgabe zugrunde, einen Leistungsanschluss der eingangs genannten Art weiter zu verbessern, so dass auch unter dem Einfluss von betriebsbedingten Vibrationen und von Temperaturwechselbelastungen die Dichtheit der Anordnung gegenüber dem Eindringen von fluiden Medien dauerhaft gewährleistet ist.

Diese Aufgabe wird durch einen gattungsgemäßen Leistungsanschluss mit den kennzeichnenden Merkmalen des Patentanspruchs 1 gelöst.

Vorteilhafte Ausgestaltungen und Weiterbildungen der Erfindung sind den abhängigen Ansprüchen sowie der nachfolgenden Figurenbeschreibung entnehmbar.

Es wird gemäß der Erfindung ein Leistungsanschluss für ein elektrisches Gerät, insbesondere für eine elektrische Maschine zum Antreiben eines Kraftfahrzeuges vorgeschlagen, welcher zunächst ein Gehäuseelement umfasst. Dabei bildet das Gehäuseelement ein Gerätegehäuse des elektrischen Geräts aus oder ist ausgebildet, um eine Durchgangsöffnung eines Gerätegehäuses zu verschließen. Der Leistungsanschluss umfasst weiter zumindest einen das Gehäuseelement durchgreifenden Leiter mit einem innenseitigen Abschnitt, welcher zur Anordnung innerhalb eines Gerätegehäuses vorgesehen ist, mit einem außenseitigen Abschnitt, welcher zur Verbindung des elektrischen Gerätes mit einer externen Energiequelle ausgebildet ist und mit einem in dem Gehäuseelement eingebetteten Abschnitt, wobei an dem eingebetteten Abschnitt zwischen dem Leiter und dem Gehäuseelement ein Dichtelement angeordnet ist. Es wird vorgeschlagen, das Dichtelement als eine Ummantelung auszubilden, welche an dem Leiter erzeugt wird und wobei sich das Dichtelement zumindest auch über einen Teil des innenseitigen und/oder des außenseitigen Abschnitts, also an einem außerhalb des Gehäuseelements befindlichen Abschnitt des Leiters erstreckt, und diesen im Wesentlichen dichtend umschließt.

Das vorgesehene Dichtelement kann sich demnach grundsätzlich von dem außenseitigen Abschnitt über den eingebetteten Abschnitt bis zu dem innenseitigen Abschnitt erstrecken. Unabhängig davon kann das Dichtelement insbesondere nicht lösbar zwischen dem Leiter und dem Gehäuseelement angeordnet bzw. ausgebildet sein. Der Vorteil der vorgeschlagenen Ausbildung des Dichtelements besteht darin, dass eine wirksame Dichtfläche des Dichtelements zum Leiter bis in einen Bereich außerhalb des Gehäuseelements vergrößert wird, wodurch eine Kriechstrecke gegenüber einem Eindringen von Feuchte in das Innere des Geräts über die unmittelbare Oberfläche des Leiters erheblich verlängert wird. Gleichzeitig wird dadurch auch eine Kontaktfläche zwischen einer äußeren Oberfläche des Dichtelements und einer inneren Oberfläche des Gehäuseelements vergrößert, so dass diese Grenzfläche in ihrer Gesamtheit gegenüber der Ausbildung von Durchgangsrissen weniger anfällig ist.

Bei der Herstellung des Leistungsanschlusses wird in einem Prozessschritt zunächst das Dichtelement auf dem Leiter aufgebracht oder erzeugt und in einem weiteren Prozessschritt werden der Leiter und das Dichtelement so in dem Gehäusematerial eingebettet, dass sich das Dichtelement zumindest über einen Teil des innenseitigen und/oder des außenseitigen Abschnitts des Leiters erstreckt und diesen dichtend umschließt.

Die genannten Prozessschritte sind zum Beispiel im Rahmen eines zweistufigen Gießverfahrens, insbesondere eines Kunststoff-Spritzgussverfahrens realisierbar, wobei zunächst ein Leiter zumindest in einem Teilbereich mit einem Kunststoff ummantelt wird und auf diese Weise zum Beispiel in einem ersten Spritzgusswerkzeug ein Vorspritzling erzeugt wird und wobei dieser Vorspritzling in dem ersten oder in einem zweiten Werkzeug zur Bildung des Gehäuseelements mit demselben oder mit einem anderen Kunststoff umspritzt wird. Als Material kann für beide Prozessschritte ein Kunststoff, insbesondere ein spritzgussfähiger thermoplastischen Werkstoff, zum Beispiel ein Polyphenylsulfit (PPS), Verwendung finden, welcher gegebenenfalls mit einer weiteren Phase, insbesondere mit Glasfasern verstärkt sein kann. Das Gehäuseelement kann somit gemäß dieser Methode an das Dichtelement angespritzt bzw. angeformt sein.

Alternativ kann das Dichtelement bzw. die Ummantelung anstelle der Erzeugung eines Vorspritzlings auch durch eine Beschichtung eines Leiters, z.B. durch eine Pulverbeschichtung oder ähnliches erzeugt werden. Eine weitere Möglichkeit stellt das Aufbringen eines Lacküberzugs oder einer Imprägnierschicht auf einen Leiter dar. Grundsätzlich kann das Dichtelement im Weiteren auch durch ein Harz, ein Elastomer, z.B. durch ein Silikon oder ein thermoplastisches Elastomer oder durch ein Duroplast dargestellt werden. Als weitere alternative Herstellverfahren können auch in Verbindung mit jeweils dazu geeigneten Werkstoffen auch Spritzpressen oder Spritzprägen eingesetzt werden.

Gemäß einer vorteilhaften Ausführungsform kann der innenseitige Abschnitt des Leiters einen inneren Anschlussbereich und/oder der außenseitige Abschnitt einen äußeren Anschlussbereich aufweisen, wobei im Wesentlichen lediglich der jeweilige Anschlussbereich von dem Dichtelement frei bleibt.

Da der oder die Leiter eines Leistungsanschlusses zur Führung einer Spannung und zum Tragen eines elektrischen Stromes vorgesehen sind, erweist es sich als sinnvoll, das Dichtelement aus einem elektrischen Isolationswerkstoff zu fertigen und das Dichtelement, insbesondere am innenseitigen Abschnitt des Leiters als einen elektrischen Isolationsmantel des Leiters auszubilden. Auf diese Weise können insbesondere bei höheren Spannungen die Durchschlagfestigkeit und die Isolationsgüte des Leistungsanschlusses gesteigert werden. Somit können außerhalb des Gehäuseelements angeordnete Leiterabschnitte mit einem geringerem Abstand zu Bauteilen oder Leitern mit einem davon abweichenden Potential geführt und die gesamte Anordnung bauraumsparend ausgeführt werden.

Es ist hinsichtlich der Werkstoffauswahl von Vorteil, wenn mit Bezug auf eine konkrete Anwendung, zum Beispiel in einem Motorraum eines Kraftfahrzeuges, das Gehäuse und das zumindest eine Dichtelement aus einem gegenüber den dort herrschenden Temperaturen beständigen und isolationsfesten spritzgussfähigen thermoplastischen oder duroplastischen Werkstoff gefertigt sind.

Mit noch weiterem Vorteil kann der aus dem Gehäuseelement herausragende Bereich des Dichtelements flexibel ausgeführt sein, so dass ein bei der Montage, im Betrieb oder bei Temperaturwechselbelastungen auftretender statischer oder zeitlich variierender Versatz des Leistungsanschlusses zu einem Anschlussbereich des inneren Abschnitts kompensiert werden kann. Mit dem Begriff flexibel soll dabei ausgedrückt werden, dass das Dichtelement einer Relativbewegung des umschlossenen Leiters innerhalb gewisser Grenzen folgen kann. Bei der Verwendung eines Kunststoffes kann eine gewünschte Flexibilität beispielsweise durch eine Modellierung der Wandstärke oder durch eine entsprechende Werkstoffauswahl erzielt werden. Eine gebräuchliche Wandstärke für die Ummantelung kann etwa 0,5 bis ca. 3 mm betragen und damit im vorstehend erläuterten Sinne flexibel sein.

Optional kann der Leiter mehrteilig, also zumindest zweiteilig aufgebaut sein. Der Leiter kann dabei ein innenseitiges Leiterelement und ein außenseitiges Leiterelement aufweisen, welche über einen gegenseitigen Verbindungsbereich miteinander verbunden sind und wobei sich der Verbindungsbereich im eingebetteten Abschnitt des Leiters befindet. Auf diese Weise wird der innenseitige Abschnitt mit dem inneren Anschlussbereich durch das innenseitige Leiterelement und der außenseitige Abschnitt mit dem äußeren Anschlussbereich durch das außenseitige Leiterelement gebildet. Die Leiterelemente können in deren Geometrie auf den jeweiligen Anschlussbereich und die dort realisierte Verbindungsart ausgelegt werden. Der gegenseitige Verbindungsbereich der Leiterelemente kann stoffschlüssig, formschlüssig oder kraftschlüssig ausgebildet sein.

Eine Weiterbildung der Erfindung sieht vor, den zuvor erläuterten Leistungsanschluss mit mehreren gegenseitig voneinander beabstandeten Leitern auszubilden und dabei die Dichtelemente von jeweils zwei Leitern mittels Brückenabschnitten stofflich miteinander zu verbinden. Die Brückenabschnitte können bevorzugt innerhalb des Gehäuseelements angeordnet sein und von dem, das Gehäuseelement ausbildenden Kunststoff formschlüssig umgriffen und durch dort vorgesehene Aussparungen durchdrungen werden.

Ebenso können auch das Gehäuseelement und das sich an einem Leiter erstreckende Dichtelement zur gegenseitigen Verankerung gegenseitig ineinandergreifende Formschlusskonturen und Formschlussverbindungsbereiche ausbilden. Dazu können an einem Dichtelement Vertiefungen, zum Beispiel in Form von umlaufenden Nuten, Ausnehmungen oder von Vorsprüngen vorgesehen sein, welche von dem das Gehäuseelement bildenden Material ausgefüllt bzw. von diesem umgriffen werden.

In weiterer Hinsicht kann das Gehäuseelement an seiner Außenfläche eine Dichtfläche zur Anlage eines Dichtelements aufweisen, welches zum Zusammenwirken mit einer Durchgangsöffnung eines Gerätegehäuses vorgesehen ist. In noch weiterer Hinsicht kann ein nicht von dem vorstehend erläuterten Dichtelement bedeckter innen- oder außenseitiger Abschnitt des Leiters mit einem weiteren Dichtelement zusammenwirken, beispielsweise mit einer Einlegedichtung in Form einer Ringdichtung.

Nachfolgend wird die Erfindung anhand einer in den Figuren dargestellten Ausführungsform beispielhaft erläutert.

Es zeigen:
- Fig. 1: einen Leistungsanschluss für eine elektrische Maschine mit einem Gehäuseelement und mit mehreren das Gehäuseelement durchgreifenden Leitern mit Dichtelementen in einer perspektivischen Darstellung;
- Fig. 2: eine perspektivische Darstellung einer aus drei Leitern und zugehörigen Dichtelementen gemäß Fig. 1 gebildeten vorgefertigten Baueinheit, welche eine Fertigungsstufe des Leistungsanschlusses von Fig. 1 darstellt;
- Fig. 3: eine Schnittdarstellung des in Fig. 1 gezeigten Leistungsanschlusses;
- Fig. 4: eine weitere Schnittdarstellung des Leistungsanschlusses von Fig. 1.

Gleiche Gegenstände, Funktionseinheiten oder vergleichbare Komponenten sind figurenübergreifend mit den gleichen Bezugszeichen bezeichnet. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt. Um Wiederholungen zu vermeiden wird auf eine mehrfache Beschreibung identischer Gegenstände, Funktionseinheiten oder vergleichbarer Komponenten in verschiedenen Ausführungsbeispielen verzichtet und es werden diesbezüglich lediglich Unterschiede der Ausführungsbeispiele beschrieben.

Die Figuren zeigen einen Leistungsanschluss 10 für eine hier zeichnerisch nicht dargestellte elektrische Maschine zum Antreiben eines Kraftfahrzeuges, insbesondere einen Leistungsanschluss für eine 3-phasige Wechselstrommaschine, die über drei Anschlüsse mittels eines Wechselrichters mit einer externen Energiequelle, beispielsweise einem Generator und/oder einem Fahrakkumulator verbunden werden kann. Die elektrische Maschine kann somit Bestandteil eines Elektro- oder Hybridfahrzeugs sein und eine mechanische Leistung in der Größenordnung von etwa 100kW und darüber hinausgehend bis zu etwa 150 kW erzeugen, wobei die Spannung einige hundert Volt, insbesondere vorzugsweise etwa zwischen 300 - 500V, betragen kann.

Der Leistungsanschluss 10 umfasst zunächst ein aus einem thermoplastischen Kunststoff, insbesondere in einem Spritzgießverfahren gefertigtes Gehäuseelement 12, welches ausgebildet ist, eine Durchgangsöffnung eines hier zeichnerisch nicht dargestellten Gerätegehäuses zu verschließen. Das Gehäuseelement 12 wird zum Anschluss der Wechselstrommaschine von mehreren gegenseitig voneinander beabstandeten Leitern, vorliegend von drei Leitern 14, 16, 18 durchgriffen. Jeder dieser Leiter 14, 16, 18 weist einen innenseitigen Abschnitt 14a, 16a, 18a auf, der zur Anordnung innerhalb eines Gehäuses der elektrischen Maschine vorgesehen ist und einen außenseitigen Abschnitt 14b, 16b, 18b, welcher zur Verbindung der elektrischen Maschine mit einer externen Energiequelle ausgebildet ist. Zwischen diesen Abschnitten befindet sich ein in dem Gehäuseelement 12 eingebetteter Abschnitt 14c, 16c, 18c jedes Leiters. Die innenseitigen Abschnitte 14a, 16a, 18a und die außenseitigen Abschnitte 14b, 16b, 18b befinden sich also jeweils außerhalb des Gehäuseelements 12 bzw. sind nicht vollständig von dem Gehäusematerial umgeben und zur Verbindung frei zugänglich.

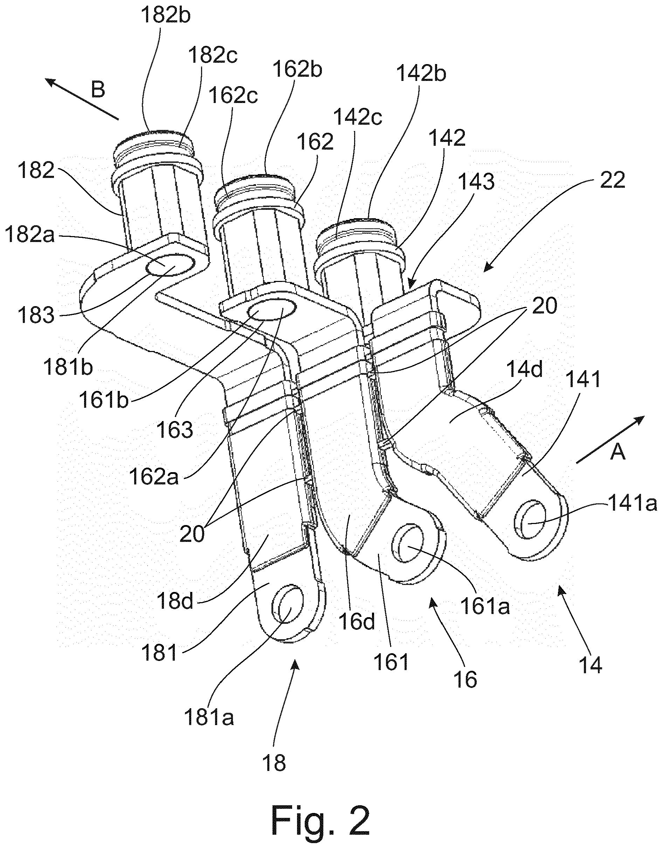

In Fig. 2 ist erkennbar, dass jeder Leiter 14, 16, 18 mehrteilig, hier insbesondere zweiteilig ausgebildet ist und ein innenseitiges Leiterelement 141, 161, 181 und außenseitiges Leiterelement 142, 162, 182 aufweist, welche jeweils über einen gegenseitigen Verbindungsbereich 143, 163, 183 miteinander verbunden sind.

Die innenseitigen Leiterelemente 141, 161, 181 sind als gestanzte und gebogene Bandleiter, insbesondere aus einem Kupferblech hergestellt und weisen jeweils an deren freien Endseite einen inneren Anschlussbereich 141a, 161a, 181a in Form einer Durchgriffsöffnung zur Herstellung einer Schraubverbindung mit einer hier zeichnerisch nicht dargestellten Stator-Verschaltungsanordnung der Wechselstrommaschine dar, mit der eine Statorwicklung gespeist werden kann.

An der anderen Endseite der Leiterelemente 141, 161, 181 ist ein Verbindungsmittel 141b, 161b, 181b in Form einer Aufnahmeöffnung ausgebildet, von welcher ein als Zapfen ausgeführtes Verbindungsmittel 142a, 162a, 182a des außenseitigen Leiterelements 142, 162, 182 aufgenommen ist. Das außenseitige Leiterelement 142, 162, 182 ist aus Kupfer in Form einer Hülse gefertigt mit einer sich in Richtung des gegenseitigen Verbindungsbereichs 143, 163, 183 erstreckenden zentralen Ausnehmung, insbesondere mit einer Gewindebohrung und mit einer Kontaktfläche ausgebildet, welche einen äußeren Anschlussbereich 142b, 162b, 182b zur Festlegung eines externen Anschlusskabels mittels eines Schraubbolzens definiert. Der gegenseitige Verbindungsbereich 143, 163, 183 ist vorliegend als eine Pressverbindung ausgeführt, wobei jedoch auch andere Verbindungsarten wie zum Beispiel eine Löt- oder Schweißverbindung, eine Niet- oder eine Schraubverbindung oder ähnliches als zusätzliche oder alleinige Verbindung denkbar sind. Die Hülsen sind zur drehgesicherten Festlegung in der Kunststoffmatrix des Gehäuseelements 12 mit einem von einer kreisförmigen Geometrie abweichenden Querschnitt und insbesondere unter Ausbildung von ebenen Flächen gebildet.

Es ist insbesondere in Fig. 2 weiter erkennbar, dass die an dem Leistungsanschluss 10 vorgesehenen mehreren Leiter 14, 16, 18 gegenseitig voneinander beabstandet sind, wobei sich deren inneren Anschlussbereiche 141a, 161a, 181a längs einer ersten Richtung A erstrecken und wobei insbesondere die Bandleiter mit deren inneren Anschlussbereichen 141a, 161a, 181a in einer gemeinsamen Kontaktebene angeordnet sind. Die Leiterelemente 141, 161, 181; 142, 162, 182 sind so ausgebildet, dass deren Verbindungsmittel 141b, 161b, 181b, das heißt die Aufnahmeöffnungen in einer gemeinsamen Verbindungsebene liegen und sich in einer zweiten Richtung B erstrecken, welche von der vorgenannten Richtung abweicht und insbesondere um 90° gegenüber dieser verdreht ist.

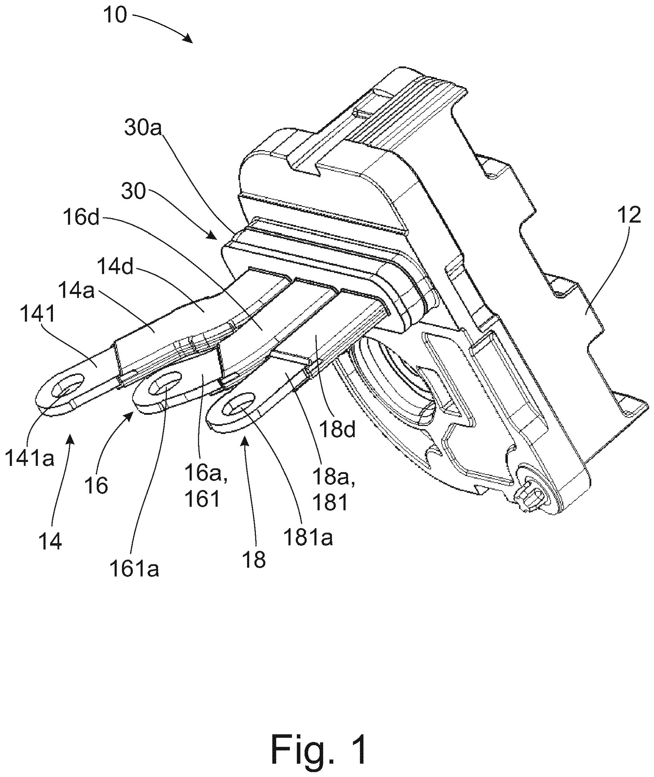

Der Verbindungsbereich 143, 163, 183 befindet sich im Endzustand gemäß Fig. 1, 3, 4 im eingebetteten Abschnitt 14c, 16c, 18c eines Leiters 14, 16, 18, also innerhalb des Gehäuseelements 12. Fig. 2 zeigt somit einen Zwischenzustand vor der Ausbildung des Gehäuseelements 12.

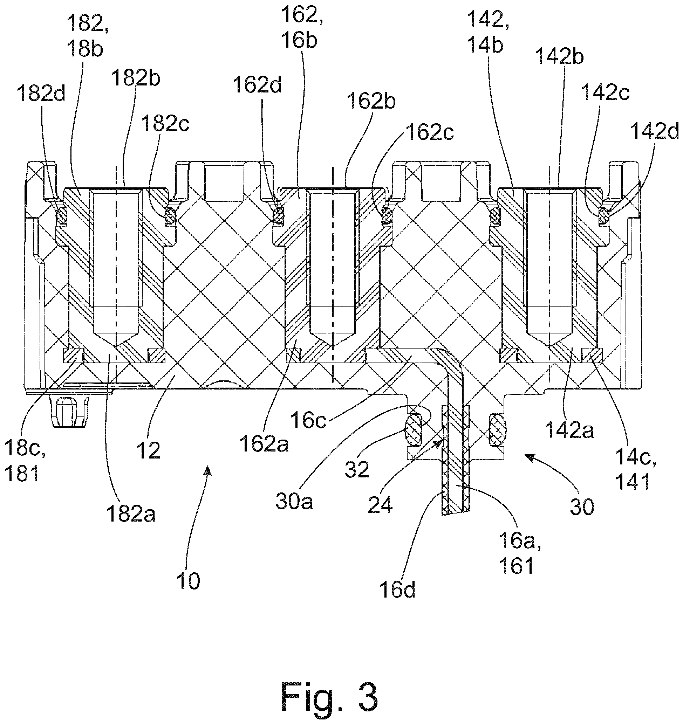

Die innenseitigen Leiterelemente 141, 161, 181 weisen weiterhin jeweils eine Ummantelung aus einem Kunststoff auf, welche einerseits ein Dichtelement 14d, 16d, 18d zwischen einem Leiter 14, 16, 18 und dem Gehäuseelement 12 darstellt und welche andererseits gleichzeitig als ein elektrischer Isolationsmantel dient. Wie besonders in Fig. 3 zu erkennen, erstreckt sich die Ummantelung bzw. das Dichtelement 16d von dem eingebetteten Abschnitt 16c des dort sichtbaren Leiters 16 bzw. des innenseitigen Leiterelements 161 bis in einen Bereich weit außerhalb des Gehäuseelements 12. Das Leiterelement 161 wird von dieser Ummantelung 16d dichtend umschlossen, wobei im Wesentlichen lediglich der Anschlussbereich 161a von diesem frei bleibt, wie dieses in den weiteren Figuren zu sehen ist.

Die Ummantelung 14d, 16d, 18d ist aus einem thermoplastischen Kunststoff, insbesondere aus einem mit Glasfasern verstärkten Polyphenylsulfit, vorliegende aus PPS-GF40 mittels eines Spritzgussverfahrens erzeugt. Dabei werden alle vorgefertigten Leiter 14, 16, 18 in einem Werkzeug mit diesem Kunststoff umspritzt, wobei deren Dichtelemente 14d, 16d, 18d bzw. die Ummantelungen jeweils paarweise mittels Brückenabschnitten 20 stofflich miteinander verbunden sind. Auf diese Weise kann als ein Zwischenprodukt eine vorgefertigte Baueinheit 22 erzeugt werden, welche in einem weiteren Fertigungsschritt in ein nächstes Werkzeug eingelegt werden und zur Ausbildung des Gehäuseelements 12 mit demselben oder einem anderen Kunststoff umspritzt werden kann. Die vorgenannten Fertigungsschritte können auch mit lediglich in bzw. mit einem Werkzeug erfolgen.

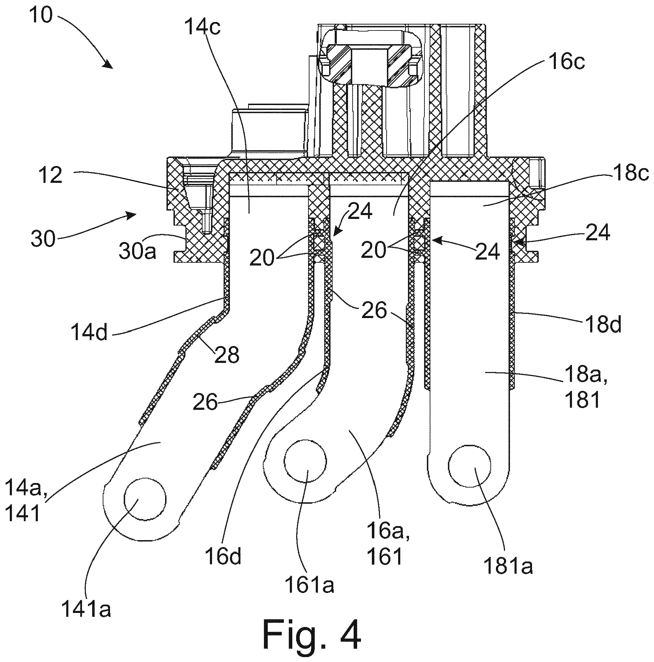

Wie in Fig. 4 zu sehen, sind am Fertigbauteil, das heißt dem Leistungsanschluss 10 ein Teil der Brückenabschnitte 20 von dem das Gehäuseelement 12 bildenden Kunststoff umspritzt bzw. umgossen und von diesem umgriffen, wobei das Gehäuseelement 12 und ein Dichtelement 14d, 16d, 18d dort und ebenso außerhalb der Brückenabschnitte 20 gegenseitig ineinandergreifende Formschlusskonturen bzw. Formschlussverbindungsbereiche 24 ausbilden und somit gegenseitig dauerhaft zueinander festgelegt sind. Ebenso sind mit Bezug auf Fig. 4 an den Leitern 14, 16, 18 Ausnehmungen 26 und Vorsprünge 28 ausgeführt, welche bei der Erzeugung der Dichtelemente 14d, 16d, 18d bzw. der Ummantelungen mit Kunststoff gefüllt bzw. von Kunststoff umgriffen werden.

Die Ummantelungen 14d, 16d, 18d liegen im Wesentlichen dichtend an den Leitern 14, 16, 18 und am Gehäuseelement 12 an und weisen eine Dicke von etwa 0,5 - etwa 3 mm auf, wodurch der aus dem Gehäuseelement 12 herausragende Bereich eines Dichtelements 14d, 16d, 18d gegenüber einer Montage und im Betrieb auftretenden Relativbewegungen der Leiter 14, 16, 18 zu mit diesen verbundenen und dazu relativ feststehenden Elementen in gewisser Hinsicht flexibel, d.h. elastisch oder gegebenenfalls zumindest teilweise plastisch verformbar ausgeführt ist.

Gemäß der Darstellung der Fig. 1, 3, 4 weist das Gehäuseelement 12 an einem die innenseitigen Leiterelemente 141, 161, 181 umgreifenden Vorsprung 30 eine Dichtfläche 30a zur Anlage eines ringförmigen Dichtelements 32 auf, welches zum Zusammenwirken mit einer Durchgangsöffnung eines Gerätegehäuses vorgesehen ist. Des Weiteren ist gemäß den Fig. 2, 3 an den außenseitigen Leiterelementen 142, 162, 182 jeweils eine Dichtflächenanordnung 142c, 162c, 182c in Form einer Ringnut mit einer Ringdichtung 142d, 162d, 182d vorgesehen, um von dieser Seite einen Eintritt von Feuchtigkeit in einen dort gegebenenfalls befindlichen Spalt zum Gehäuseelement 12 und einen Durchtritt von Öl von zu unterbinden.

### Bezugszeichen

- 10: Leistungsanschluss
- 12: Gehäuseelement
- 14, 16, 18: Leiter
- 14a, 16a, 18a: innenseitiger Abschnitt
- 14b, 16b, 18b: außenseitiger Abschnitt
- 14c, 16c, 18c: eingebetteter Abschnitt
- 14d, 16d, 18d: Ummantelung, Dichtelement
- 141, 161, 181: innenseitiges Leiterelement
- 141a, 161a, 181a: innerer Anschlussbereich
- 141b, 161b, 181b: Verbindungsmittel, Aufnahmeöffnung
- 142, 162, 182: außenseitiges Leiterelement
- 142a, 162a, 182a: Verbindungsmittel, Zapfen
- 142b, 162b, 182b: äußerer Anschlussbereich
- 142c, 162c, 182c: Dichtflächenanordnung
- 142d, 162d, 182d: Ringdichtung
- 143, 163, 183: Verbindungsbereich
- 20: Brückenabschnitt
- 22: Baueinheit
- 24: Formschlussverbindungsbereich
- 26: Ausnehmung
- 28: Vorsprung
- 30: Vorsprung
- 30a: Dichtfläche
- 32: Dichtelement
- A: erste Richtung
- B: zweite Richtung

## Patentansprüche

1. Leistungsanschluss (10) für eine elektrische Maschine zum Antreiben eines Kraftfahrzeuges, umfassend
- ein Gehäuseelement (12), welches ein Gerätegehäuse ausbildet oder welches ausgebildet ist, um eine Durchgangsöffnung eines Gerätegehäuses zu verschließen,
- zumindest einen das Gehäuseelement (12) durchgreifenden Leiter (14, 16, 18) mit einem innenseitigen Abschnitt (14a, 16a, 18a), welcher zur Anordnung innerhalb eines Gerätegehäuses vorgesehen ist, mit einem außenseitigen Abschnitt (14b, 16b, 18b), welcher zur Verbindung des elektrischen Gerätes mit einer externen Energiequelle ausgebildet ist und mit einem in dem Gehäuseelement (12) eingebetteten Abschnitt (14c, 16c, 18c),
- wobei an dem eingebetteten Abschnitt (14c, 16c, 18c) zwischen dem Leiter (14, 16, 18) und dem Gehäuseelement (12) ein Dichtelement (14d, 16d, 18d) angeordnet ist, und wobei
- das Gehäuseelement (12) aus einem thermoplastischen Kunststoff ausgebildet ist und wobei
- der Leiter (14, 16, 18) und das Dichtelement (14d, 16d, 18d) zur Ausbildung des Gehäuseelements (12) mit dem Kunststoff umspritzt sind, und wobei
- das Dichtelement (14d, 16d, 18d) als eine Ummantelung ausgebildet ist, welche an dem Leiter (14, 16, 18) erzeugt ist
**dadurch gekennzeichnet, dass**
- sich das Dichtelement (14d, 16d, 18d) zumindest über einen Teil des innenseitigen (14a, 16a, 18a) und/oder des außenseitigen Abschnitts (14b, 16b, 18b) des Leiters (14, 16, 18) erstreckt und diesen dichtend umschließt.

2. Leistungsanschluss nach Anspruch 1, **dadurch gekennzeichnet, dass** der innenseitige Abschnitt (14a, 16a, 18a) einen inneren Anschlussbereich (141a, 161a, 181a) und/oder der außenseitige Abschnitt (14b, 16b, 18b) einen äußeren Anschlussbereich (142b, 162b, 182b) aufweist, wobei im Wesentlichen lediglich der jeweilige Anschlussbereich von dem Dichtelement (14d, 16d, 18d) frei bleibt.

3. Leistungsanschluss nach Anspruch 1 oder 2, **dadurch gekennzeichnet, dass** das Dichtelement (14d, 16d, 18d) aus einem elektrischen Isolationswerkstoff gefertigt ist und einen elektrischen Isolationsmantel des Leiters (14, 16, 18) ausbildet.

4. Leistungsanschluss nach einem der Ansprüche 1 - 3, **dadurch gekennzeichnet, dass** der aus dem Gehäuseelement (12) herausragende Bereich des Dichtelements (14d, 16d, 18d) flexibel ausgeführt ist.

5. Leistungsanschluss nach einem der Ansprüche 1 - 4, **dadurch gekennzeichnet, dass** der zumindest eine Leiter (14, 16, 18) ein innenseitiges Leiterelement (141, 161, 181) und außenseitiges Leiterelement (142, 162, 182) aufweist, wobei die Leiterelemente (141, 142; 161, 162; 181, 182) jeweils über einen gegenseitigen Verbindungsbereich (143, 163, 183) miteinander verbunden sind und wobei sich der Verbindungsbereich (143, 163, 183) im eingebetteten Abschnitt des Leiters (14, 16, 18) befindet.

6. Leistungsanschluss nach einem der Ansprüche 1 - 5, **dadurch gekennzeichnet, dass** mehrere gegenseitig voneinander beabstandete Leiter (14, 16, 18) vorgesehen sind, wobei deren Dichtelemente (14d, 16d, 18d) mittels Brückenabschnitten (20) stofflich miteinander verbunden sind.

7. Leistungsanschluss nach einem der Ansprüche 1 - 6, **dadurch gekennzeichnet, dass** das Dichtelement (14d, 16d, 18d) als Kunststoffteil, insbesondere als ein Kunststoffspritzgussteil ausgeführt sind.

8. Leistungsanschluss nach einem der Ansprüche 1 - 7, **dadurch gekennzeichnet, dass** das Gehäuseelement (12) und das Dichtelement (14d, 16d, 18d) gegenseitig ineinandergreifende Formschlussverbindungsbereiche (24) ausbilden.

## Claims

1. Power connection (10) for an electrical machine for driving a motor vehicle, comprising
- a housing element (12) which forms a device housing or which is designed in order to close a passage opening of a device housing,
- at least one conductor (14, 16, 18) which passes through the housing element (12), has an inner-side section (14a, 16a, 18a) that is intended to be arranged within a device housing, has an outer-side section (14b, 16b, 18b) that is designed for connecting the electrical device to an external energy source, and has a section (14c, 16c, 18c) that is embedded in the housing element (12),
- wherein a sealing element (14d, 16d, 18d) is arranged on the embedded section (14c, 16c, 18c) between the conductor (14, 16, 18) and the housing element (12), and wherein
- the housing element (12) is formed from a thermoplastic, and wherein
- the conductor (14, 16, 18) and the sealing element (14d, 16d, 18d) are encapsulated by injection-moulding with the plastic for the purpose of forming the housing element (12), and wherein
- the sealing element (14d, 16d, 18d) is designed as a sheathing which is produced on the conductor (14, 16, 18),
**characterized in that**
- the sealing element (14d, 16d, 18d) extends at least over a portion of the inner-side section (14a, 16a, 18a) and/or of the outer-side section (14b, 16b, 18b) of the conductor (14, 16, 18) and closes the said conductor in a sealing manner.

2. Power connection according to Claim 1, **characterized in that** the inner-side section (14a, 16a, 18a) has an inner connection region (141a, 161a, 181a) and/or the outer-side section (14b, 16b, 18b) has an outer connection region (142b, 162b, 182b), wherein substantially only the respective connection region remains free of the sealing element (14d, 16d, 18d).

3. Power connection according to Claim 1 or 2, **characterized in that** the sealing element (14d, 16d, 18d) is manufactured from an electrical insulating material and forms an electrical insulation casing of the conductor (14, 16, 18).

4. Power connection according to one of Claims 1-3, **characterized in that** the region of the sealing element (14d, 16d, 18d) that protrudes out of the housing element (12) is of flexible design.

5. Power connection according to one of Claims 1-4, **characterized in that** the at least one conductor (14, 16, 18) has an inner-side conductor element (141, 161, 181) and an outer-side conductor element (142, 162, 182), wherein the conductor elements (141, 142; 161, 162; 181, 182) are connected to one another via a mutual connecting region (143, 163, 183) in each case, and wherein the connecting region (143, 163, 183) is located in the embedded section of the conductor (14, 16, 18).

6. Power connection according to one of Claims 1-5, **characterized in that** a plurality of conductors (14, 16, 18) which are mutually spaced apart from one another are provided, wherein the sealing elements (14d, 16d, 18d) of the said conductors are cohesively connected to one another by means of bridge sections (20).

7. Power connection according to one of Claims 1-6, **characterized in that** the sealing element (14d, 16d, 18d) is designed as a plastic part, in particular as a plastic injection-moulded part.

8. Power connection according to one of Claims 1-7, **characterized in that** the housing element (12) and the sealing element (14d, 16d, 18d) form mutually interengaging interlocking connecting regions (24).

## Revendications

1. Raccord de puissance (10) pour une machine électrique pour l'entraînement d'un véhicule à moteur, comprenant :
- un élément de boîtier (12) qui constitue un boîtier d'appareil ou qui est réalisé de manière à fermer une ouverture de passage d'un boîtier d'appareil,
- au moins un conducteur (14, 16, 18) s'engageant à travers l'élément de boîtier (12), avec une portion intérieure (14a, 16a, 18a) qui est prévue pour être disposée à l'intérieur d'un boîtier d'appareil, avec une portion extérieure (14b, 16b, 18b) qui est réalisée pour la connexion de l'appareil électrique à une source d'énergie extérieure et avec une portion encastrée (14c, 16c, 18c) dans l'élément de boîtier (12),
- un élément d'étanchéité (14d, 16d, 18d) étant disposé au niveau de la portion encastrée (14c, 16c, 18c) entre le conducteur (14, 16, 18) et l'élément de boîtier (12), et
- l'élément de boîtier (12) étant réalisé en plastique thermoplastique et
- le conducteur (14, 16, 18) et l'élément d'étanchéité (14d, 16d, 18d) étant surmoulés avec le plastique pour réaliser l'élément de boîtier (12),
et
- l'élément d'étanchéité (14d, 16d, 18d) étant réalisé sous forme de gaine qui est fabriquée sur le conducteur (14, 16, 18),
**caractérisé en ce que**
- l'élément d'étanchéité (14d, 16d, 18d) s'étend au moins sur une partie de la portion intérieure (14a, 16a, 18a) et/ou de la portion extérieure (14b, 16b, 18b) du conducteur (14, 16, 18) et entoure celui-ci de manière hermétique.

2. Raccord de puissance selon la revendication 1, **caractérisé en ce que** la portion intérieure (14a, 16a, 18a) présente une région de raccordement intérieure (141a, 161a, 181a) et/ou la portion extérieure (14b, 16b, 18b) présente une région de raccordement extérieure (142b, 162b, 182b), essentiellement seulement la région de raccordement respective étant exempte de l'élément d'étanchéité (14d, 16d, 18d).

3. Raccord de puissance selon la revendication 1 ou 2, **caractérisé en ce que** l'élément d'étanchéité (14d, 16d, 18d) est fabriqué à partir d'un matériau d'isolation électrique et constitue une gaine d'isolation électrique du conducteur (14, 16, 18).

4. Raccord de puissance selon l'une quelconque des revendications 1 à 3, **caractérisé en ce que** la région de l'élément d'étanchéité (14d, 16d, 18d) faisant saillie hors de l'élément de boîtier (12) est réalisée sous forme flexible.

5. Raccord de puissance selon l'une quelconque des revendications 1 à 4, **caractérisé en ce que** l'au moins un conducteur (14, 16, 18) présente un élément conducteur intérieur (141, 161, 181) et un élément conducteur extérieur (142, 162, 182), les éléments conducteurs (141, 142 ; 161, 162 ; 181, 182) étant connectés les uns aux autres à chaque fois par le biais d'une région de connexion mutuelle (143, 163, 183) et la région de connexion (143, 163, 183) se trouvant dans la portion encastrée du conducteur (14, 16, 18).

6. Raccord de puissance selon l'une quelconque des revendications 1 à 5, **caractérisé en ce que** plusieurs conducteurs (14, 16, 18) espacés mutuellement les uns des autres sont prévus, leurs éléments d'étanchéité (14d, 16d, 18d) étant connectés par liaison de matière les uns aux autres au moyen de portions de pont (20).

7. Raccord de puissance selon l'une quelconque des revendications 1 à 6, **caractérisé en ce que** l'élément d'étanchéité (14d, 16d, 18d) est réalisé sous forme de pièce en plastique, en particulier sous forme de pièce moulée par injection de plastique.

8. Raccord de puissance selon l'une quelconque des revendications 1 à 7, **caractérisé en ce que** l'élément de boîtier (12) et l'élément d'étanchéité (14d, 16d, 18d) constituent des régions de connexion par engagement par correspondance de formes (24) s'engageant mutuellement les unes dans les autres.
